# EUROPEAN PATENT APPLICATION

(11) **EP 0 986 021 A1**
(43) Date of publication of application: **15.03.2000**
(21) Application number: 99420181.2
(22) Date of filing: 26.08.1999
(51) Int. Cl.: G06K 11/06, G06K 11/08

(54) **Process and device for translating an input signal whose variation ranges depend on the user with a view to controlling opposing actions**

(30) Priority: 09.09.1998 FR 9811391
(71) Applicant: EASTMAN KODAK COMPANY, Rochester, New York 14650-2201 (US)
(72) Inventor: Vachette, Thierry, c/o Kodak Industrie, 71102 Chalon sur Saone Cedex (FR); Philiponet, Etienne Pierre, c/o Kodak Industrie, 71102 Chalon sur Saone Cedex (FR)
(74) Representative: Buff, Michel

(57) **Abstract**

After an initialization step 22, wherein a threshold and a temporary maximum signal are determined, the device and the process translates the input signal into an output signal by a standardization step 16 to vary the output signal in a practically constant range independent of the input range and then calculates, in a centering step 18, a level of neutral signal for which the interpretation of the control signal will supply no modification. The level of the stabilized neutral signal is set in an advantageous time range between 1 s and 2 s.

## Description

The present invention relates to the translation of a control signal whose variation ranges depend on the user in order to be able to control opposing actions. Most particularly, the invention relates to an interface circuit that enables the translation of signals coming from a sensor functioning between a noise value when the sensor is not excited and a maximum value that is a function of the user and his behavior.

The usual interactive interfaces of computer systems, such as for example mice, joysticks, and trackballs customarily use the physical movement of part of the interface to move a cursor or similar device. These interfaces work relatively, i.e. the direction of movement is detected in order to be able to modify the position of the cursor or other device in one direction or another.

Other interactive interfaces, such as for example touch sensitive screens, do not have moveable organs that enable for example movement to be detected. However, this type of interface automatically detects the absolute position of the indicator and thus supplies the position to be displayed.

The French Patent Application 9800871 filed on 22 January 1998 and the European Patent Application 98420115.2 filed on 6 July 1998 propose an interactive interface in which the supplied signals are obtained with one or more fixed analog sensors. The response is a function of the reflection of a light beam on the user's hands. The size of the response depends not only on the area of the hands moving close to the sensor, but also on their relative position to the sensor(s), and therefore also depends on the user's behavior. It may be noted that this response can never be negative. So that the use of such an interface is not dependent on the user's stature or behavior, the signal has to be modified according to the user. Thus it is desirable to automatically modify the signal supplied by the sensor so that the amplitude of the output signal is practically the same, for whichever user and whatever the behavior of this user in relation to the interface.

As was previously stated, it is customary to supply modifications that are in opposition; for instance movement to the left in opposition to movement to the right, or upwards movement in opposition to downwards movement, or enlargement in opposition to reduction, etc. In this case, conventional interfaces, which operate relatively and have movement detection, enable gradual modification based on an original or neutral position. In fact, when there is no action, the delivered signal is zero and the direction of the action allows delivery of a gradual signal in one direction or in the opposite direction. In the case of the interface described in the Patent Application 9800871 or in the European Patent Application 98420115.2, and as previously stated, the delivered signal is increasing but always with the same sign. In this type of interface, when there is no action the delivered signal should be zero, and when the interface is excited the delivered signal is proportional to the action and increases from zero. This type of operation does not allow gradual opposing functions to be managed in one direction or the other. Therefore, it is desirable to automatically modify the signal to supply gradual modifications in opposing directions from a position called the original or neutral position.

The term "dynamic" as used in the present application for digital signals means the number of possible values taken by the digital signal, i.e. 256 for an 8-bit signal, and 4096 for a 12-bit signal. For an analog signal, it is the difference between the maximum possible value and the threshold value.

It is the object of the invention to provide a process for translating at least one input signal, coming from a sensor operating between a noise value, when no excitation is supplied to the sensor, and a maximum value, into an output signal having a set dynamic independent from the maximum value of the input signal and having a neutral operating point to be able to control opposing actions. The process comprises the following steps: a threshold value is determined using successive values of the input signal; a maximum signal value is determined using successive values of the input signal; the output signal value is determined by providing for each input signal value: a zero signal when the input signal value is less than the threshold value and, when the input signal value is not less than the threshold value, a signal whose value is obtained by multiplying the input signal value reduced by the threshold value, by a standardizing factor obtained by dividing the dynamic determined by the maximum signal value reduced by the threshold value; and an output signal value is determined for which the operation obtained by the interface is neutral, this value being a time function of the existence of an input signal greater than the threshold value.

It is another object of the invention to provide a translating circuit for an interface, said circuit receiving an input signal coming from a sensor operating between a noise value, when no excitation is supplied to the sensor, and a maximum value, and translating said input signal into an output signal having a set dynamic independent from the maximum value of the input signal and having a neutral operating point of the interface to be able to control opposing actions. The circuit comprises a first memory to record a threshold value dependent on the noise value; a second memory in which is recorded the maximum signal value coming from the sensor; a standardizing circuit to modify the value of the signal coming from the sensor to supply a zero signal when the signal coming from the sensor is less than the threshold, and a standardized signal when the signal value is not less than the threshold value, the standardized value being obtained by multiplying the signal value coming from the sensor, reduced by the threshold value, by a standardizing factor obtained by dividing the dynamic set by the maximum signal value reduced by the threshold value; and a circuit to determine the standardized signal value for which the operation obtained by the interface is neutral, this value being a time function of the existence of an input signal greater than the threshold value.

These and other aspects, objects, features and advantages of the present invention will be more clearly understood and appreciated from a review of the following detailed description of the preferred embodiments and appended claims and by reference to the accompanying drawings.

Figure 1 represents a block diagram of the process of translating signals in accordance with the present invention.

Figure 2 represents a block diagram of the initialization operation used in Figure 1 in a device having two channels.

Figure 3A represents a block diagram of a first embodiment of the acquisition operation used in Figure 1.

Figure 3B represents a block diagram of a second embodiment of the acquisition operation used in Figure 1.

Figure 4 represents a block diagram of the standardization operation used in Figure 1.

Figure 5A represents a block diagram of the centering operation used in Figure 1 in a first operating mode.

Figure 5B represents a block diagram of the centering operation used in Figure 1 in a second operating mode.

Figure 6A represents a block diagram of the shift operation useful in the centering phase used in Figure 5A.

Figure 6B represents a block diagram of the shift operation useful in the centering phase used in Figure 5B.

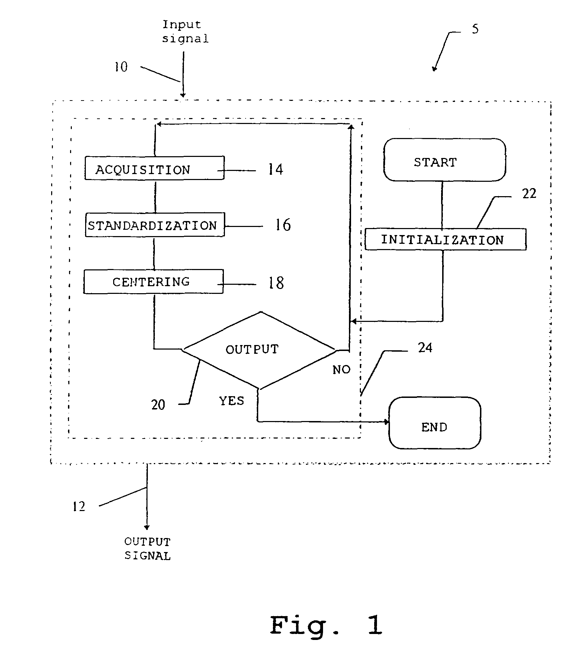

A particular embodiment will now be described that can be used at the output of an interface similar to that described in the French Patent application 9800871 or in the European Patent Application 98420115.2. As can be seen in Figure 1, the device 5 incorporating the invention, also hereafter referred to as the translation circuit and represented by the dotted line, comprises an input 10 for receiving an input signal, which can be either an analog signal or a series of digital signals, coming from a sensor, not shown, and an output 12 delivering either an analog signal or a series of output digital signals. One output signal corresponds to each input signal, and its value depends on the value of the input signal modified by the process according to the invention.

The following description was produced in relation to a particular embodiment in which the analog signal coming from the sensor was sampled and then digitized to supply a series of input digital signals.

When the device 5 incorporating the invention is used, first an initialization step 22 is carried out that will be described in more detail below. This initialization step aims to acquire the data for the interface in which the device is incorporated in order to allow for the environment in which it is located. When the initialization step is completed, the device loops back to itself in order to process a digital signal at input 10, i.e. to translate it by steps 14, 16, 18, and to send it to output 12 after the translation process is completed. Test 20 allows the operation of device 5 to be interrupted.

The translation process according to the invention will be described in liaison with a device supplied with two channels, for example one corresponding to the X-axis, also called the right-hand channel and one corresponding to the Y-axis, also called the left-hand channel. Clearly those skilled in the art can easily modify the two channel device to use either a single channel or more than two channels.

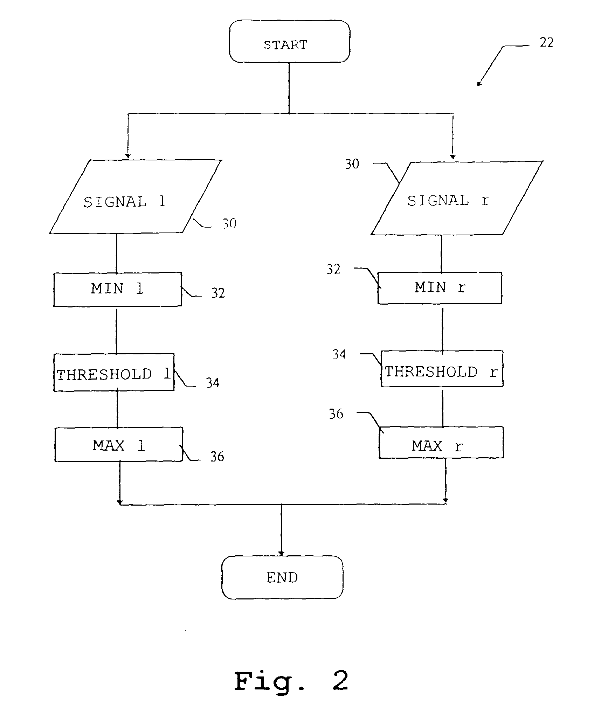

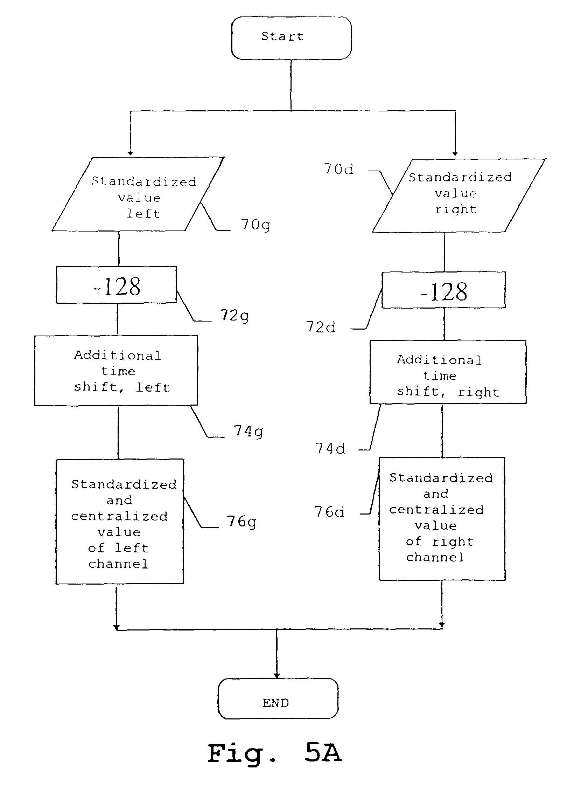

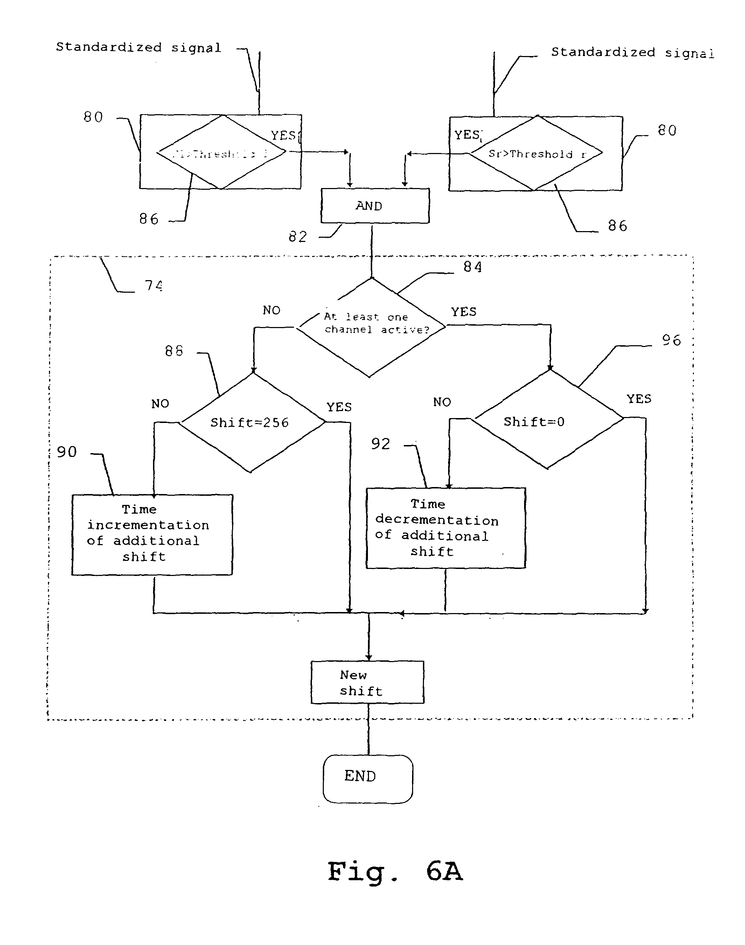

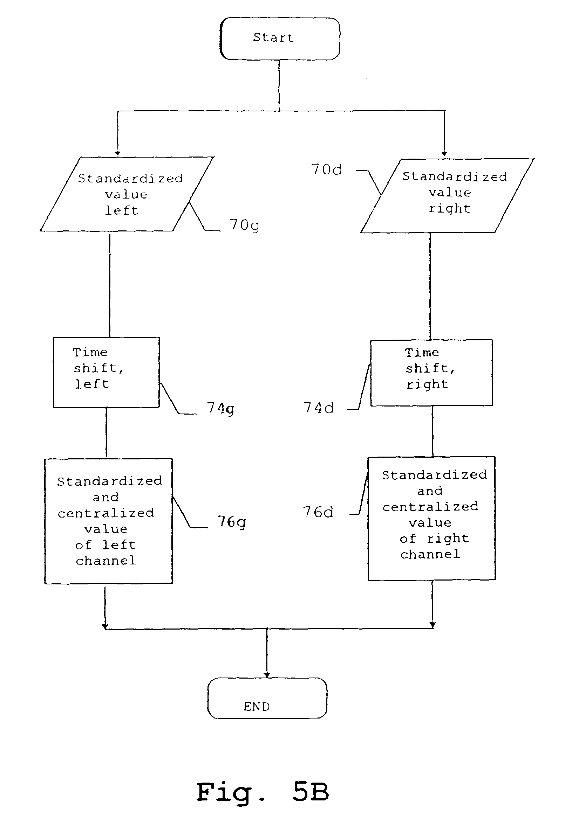

The initialization step represented in more detail in Figure 5 will now be described. When the device 5 is started, the digital signal, relating to each channel and sent to the input 10, is provided to the initialization circuit 22 and arrives at 30 as shown in Figure 2. The value corresponding to the minimum is recorded at step 32 in a memory associated with each channel. This minimum value corresponds for example with the value of signal Sᵣ or Sₗ, also called S_{channel}, from the sensor when no user is close to the interface incorporating the sensor, and consequently when no excitation is supplied to the sensor. Clearly in this case the minimum value corresponds to a noise signal. Synchronous detection allows the amplitude of the signals to be decreased in the absence of excitation. Clearly this minimum value can be selected to correspond to an average of a set number of measurements or of a set period during which no excitation is supplied to the relevant sensor. After having determined the minimum value MIN r or MIN l, in 34 a threshold value is determined which is a function of this minimum,
Threshold_{channel}=F(Min_{channel}). For instance, the threshold value can be selected as equal to three times the minimum value, but obviously any other function can be used. The use of this threshold value will be clearly understand when studying the translation process according to the invention. Then in 36 a maximum value is determined, MAX r or MAX l, also called Max_{channel}, for the signal corresponding to each channel. For reasons that will become clear below, this maximum value should not be less than the threshold value increased by one unit. The initialization phase of the device incorporating the invention has just been described. Next it will be seen that the minimum and maximum values for each channel can, according to the embodiment of the invention, be updated at will or be determined with each new use. In the most efficient embodiments these values are updated continuously.

During the initialization step, a minimum signal value Min_{channel} and a threshold value Threshold_{channel} were recorded for each channel in a first memory 34, and a maximum signal value Max_{channel} in a second memory 36. In this step, the minimum value is obtained by a measurement of the signal in the absence of excitation of the sensor(s) supplying the digital signals to the input of the device incorporating the invention; which corresponds to a noise signal. Then, a threshold value and a maximum value are obtained. It is now possible to continuously translate, by the process according to the invention, a sequence of digital input signals coming to the input 10 of the device 5 into output signals by means of the circuit shown by the dotted line 24.

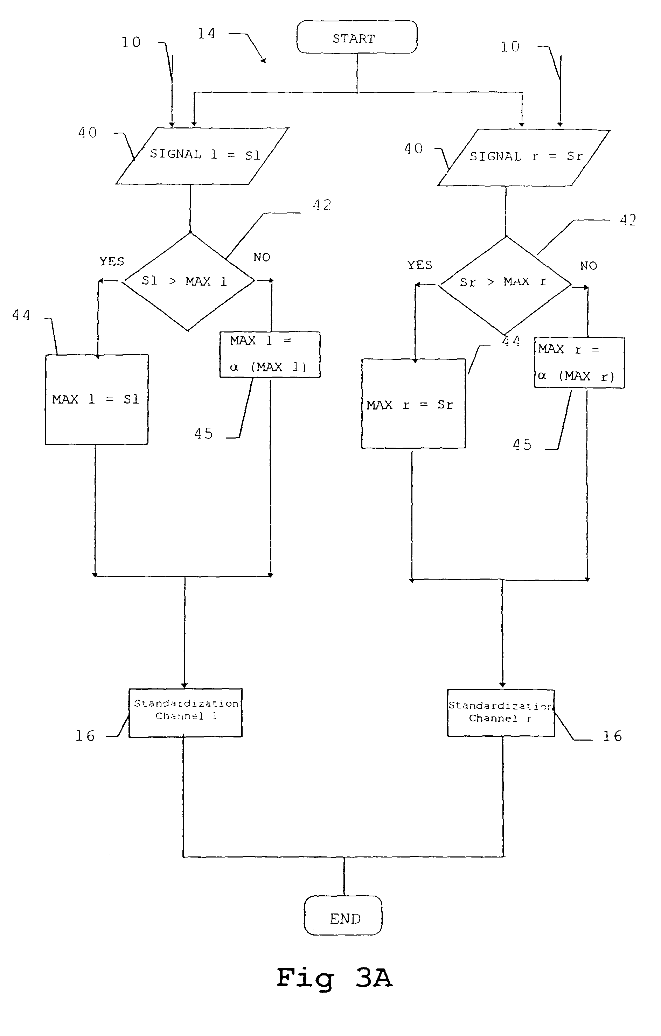

This is done by first acquiring the signal transmitted to the input 10 of the device 5 by recording at step 40 the signal present in each channel Sₗ or Sᵣ. First Figure 3A is referred to, which represents a first embodiment. Once the signal has been recorded, in 42 the signal value is tested against the maximum value recorded. During the first passage, the maximum value is that determined during the initialization phase. When the signal is greater than the maximum value recorded, Max_{channel}, in 44 the maximum signal value Max_{channel} is revised by recording the signal value S_{channel} in the second memory 36, and then the signal is transmitted for standardization at step 16 which will be described below. To enable the automatic adaptation of the circuit incorporating the invention, it is necessary to allow for the drifts that can take place to the minimum and maximum values as well as for modification to the amplitude range of the signal operation. Indeed, if the user moves his hands in a significant way the sequence of digital signals will have extreme values markedly different to those of a user only moving his hands gently. Thus it is arranged, when the signal value S_{channel} is not greater than the maximum recorded value for a set period, to modify the maximum and/or minimum values. In a particular embodiment in which the sampling of the signal is in the order of 100 Hz and for which it is estimated that this maximum value must be decreased to zero in some seconds, a decrease factor α, for example, can be applied to the maximum value in 45 at each passage. Clearly other non linear functions can be used to decrease the maximum recorded level for each channel when the input signal levels of each channel do not reach the maximum value for a set period. After this readjustment operation of the maximum value has been carried out, the signal is transmitted to step 16 for standardization, which will be described below.

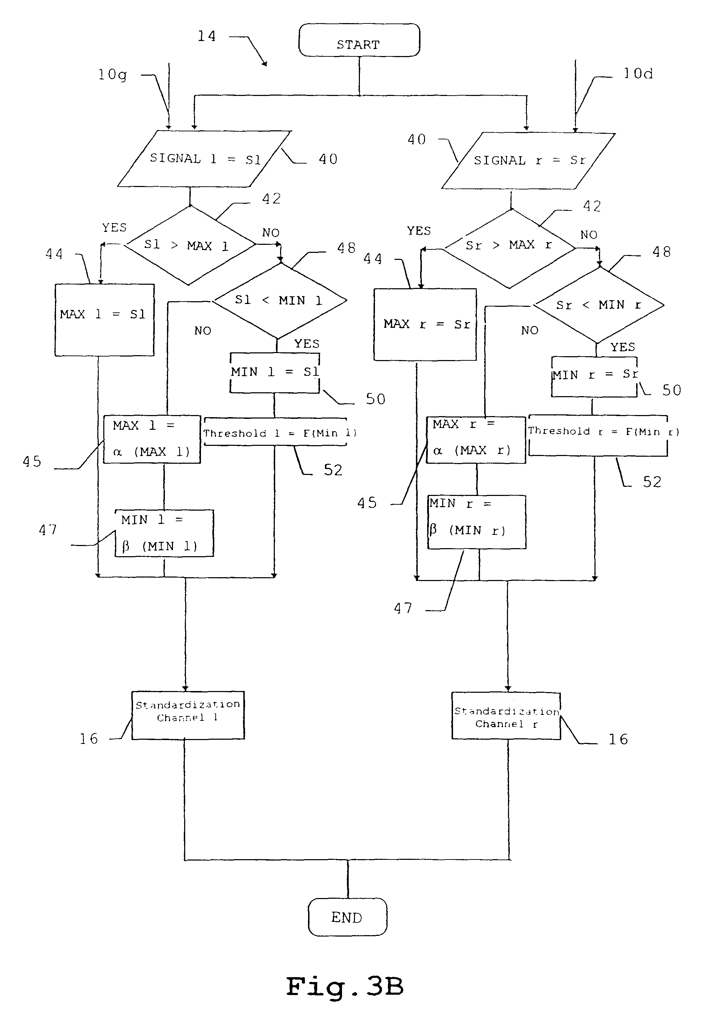

In the embodiment represented in Figure 3B a continuous update function for the minimum value has been added. When, at step 42, the signal value S_{channel} is not greater than the maximum recorded value, in 48, the signal value S_{channel} is tested against the minimum recorded value. During the first passage the minimum value of the channel is equal to that recorded in the initialization step. When in 48, the signal value S_{channel} is less than the minimum recorded value, in 50 this new minimum value is recorded in the corresponding memory Min_{channel}, and then in 52 the corresponding threshold value Threshold_{channel} is updated by recording this new value in the first memory. When, at step 48 the signal value S_{channel} is greater than or equal to the minimum recorded value, the maximum and minimum values of the channel are readjusted in the manner previously explained. In 45, the maximum value of the channel is adjusted, for example, by applying a decrease factor α, and in 47 the minimum value of the channel is adjusted, for example, by applying an increase factor β. Then the signal S_{channel} is transmitted to the standardization step 16.

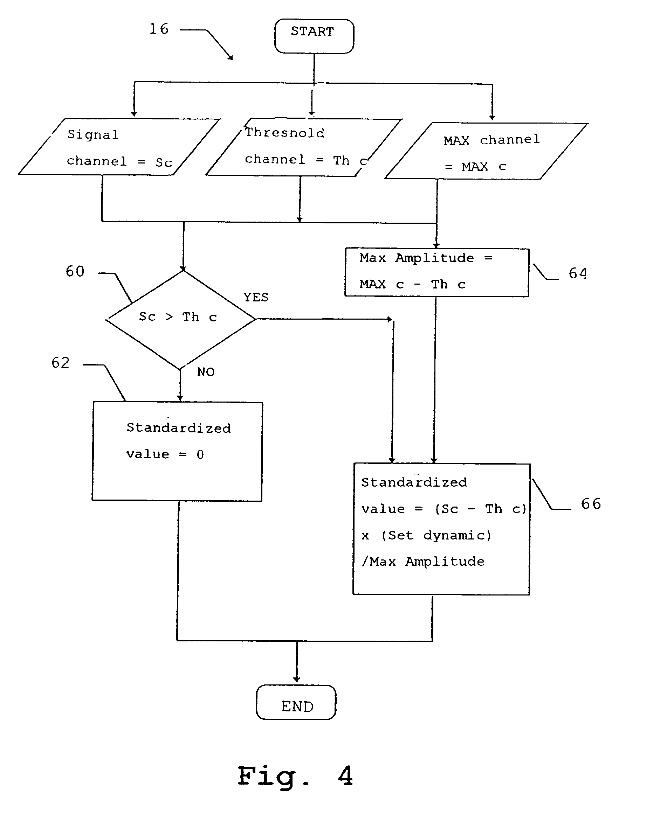

Figure 4 represents a block diagram of a standardization circuit 16 using one step of the invention's process. In this figure, lozenges represent the signals necessary to apply this step of the invention's process. These signals comprise the signal S_{channel} coming to the input 10 of the device 5, relating to the relevant channel and recorded at step 40, the signal Threshold_{channel} or Thc determined by the operation 34 (Fig 2) or by the operation 52 (Fig 3B), and the signal corresponding to the maximum value Max_{channel} obtained either by the operation 36 (Fig 2) or the operation 44 (Fig 3A or 3B) possibly modified by step 45. In this step, in 64 the maximum amplitude associated with each channel is calculated first. The maximum amplitude supplied by the device is equal to the maximum signal value decreased by the threshold value. In 60 the signal value S_{channel} is tested against the value of the threshold Thc of the respective channel. When the signal Sc is less than the threshold, the signal is considered as zero and its standardized value is set to zero. When the signal value Sc is greater than or equal to the threshold, in 66 the standardized value is calculated first by calculating the real amplitude which is equal to the signal value decreased by the threshold value and by applying to this real amplitude a standardization factor which is equal to the value of the determined dynamic divided by the maximum real amplitude. Thus at the output of the standardization step a signal whose variation amplitude is standardized and equal to the wanted dynamic is obtained. In the embodiment the wanted dynamic is an 8-bit digital signal, i.e. varying between 0 and 255. Clearly, given the standardization method used, it is advantageous, if different output signals are not wanted for identical input signals, that the input signals' dynamic is at least equal to the wanted dynamic.

As the real signal is now standardized, its variations are between zero and the maximum amplitude which is equal to the dynamic. In order to manage opposing operations it is necessary to supply a position for which the output signal value causes neutral operation of the interface. For instance, in an application where the interface controls the movement of a cursor, neutral operation will be that when no movement of the cursor is obtained by the signal supplied by the invention's transformation circuit. In another application in which the signals coming from the invention's circuit serve to modify the image, neutral operation will be that when the image is not modified.

For certain applications, it is necessary to center the operational range to have positive and negative signals. This type of operation is represented in Figures 5A and 6A. In these conditions, during the operation of the device incorporating the invention, it is necessary to incorporate a shift and to subtract from the signals supplied to the input a value equal to half the dynamic on each channel. However, it is also necessary, when no excitation is supplied to the system, i.e. the system at rest, not to alter the normal operation of the computer receiving the series of digital signals and thereby to add to the zero signals supplied on each channel a shift equal to half the dynamic.

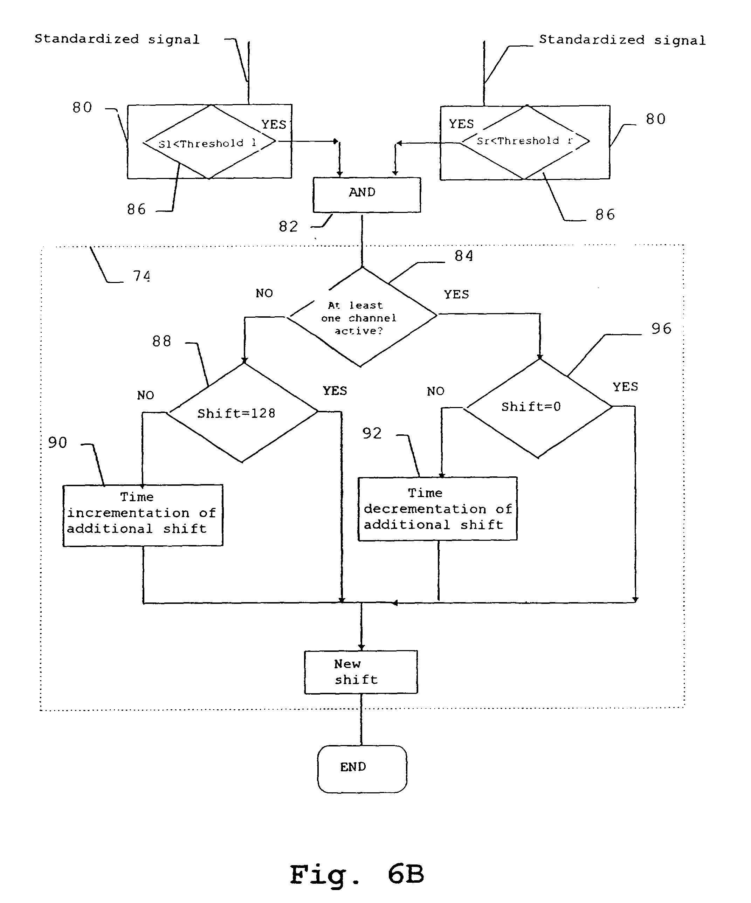

For other types of application, the modifications can be defined by an address matrix for which the signal values of each channel are used as input. This type of operation is represented in Figures 5B and 6B. In these conditions, it is advantageous to have the "Identity" application, or "neutral" operation, i.e. that for which there is no transformation, at the center of the modification matrix. When the interface supplying the series of digital signals is active, no shift is to be introduced to the various channels, but when the interface is not excited the signals to be sent to the computer should point to the identity application. As a result a signal equal to half the dynamic on each of the channels must be supplied when the "Identity" application is arranged in the center of the matrix. Thus it can be seen that whatever the selected operating mode, a shift has to be introduced, or an addressing, which is not the same when the interface is at rest or when it is active.

An embodiment will now be described in which the series of digital signals supplied has negative and positive values. Figure 5A represents diagrammatically the steps to be carried out by the invention's process to apply a shift to the standardized signal in order to "center" the series of digital signals. Using the series of standardized digital signals supplied by the previous operation, symbolized by the lozenge 70 in Figure 5A, a shift is applied to center the signal in relation to the range of output signals. This shift is equal to half the dynamic used in step 66 to standardize the digital signals. In the specific embodiment, the dynamic used was 8-bit; the shift is thus equal to 2 , i.e. 128. As previously shown, the received signal is always positive and a value equal to 128 must be taken from the standardized signal value, as represented by the reference 72. As previously shown, to obtain a signal at rest that does not disturb the normal operation of the computer, it is necessary to add at the channel an extra shift 74 whose value is equal to the dynamic. However, if this introduction is not performed gradually the operator sees a discontinuity in the operation, which is disagreeable. In these conditions, it is preferable to modify the extra shift gradually to go from a zero value when the interface is used to a value equal to the dynamic when the interface is at rest, i.e. 256 in the specific case used. Figure 6A describes an embodiment of a circuit 74 allowing this gradual modification or time modification of the shift to be obtained.

In a particular operational mode of the interface incorporating the invention, it was thought preferable to consider the interface as a whole. To determine whether this interface is active, signals representative of the active or passive state of each channel are sent to a logical gate 82. To obtain the state of a channel it is possible, for example, using a circuit 80 receiving the channel's own standardized signal, to test in 86 for the real existence of a signal, S_{channel} > Threshold_{channel}. The signal coming out from the logical gate 82 will be representative of the active state of all the channels.

In 84 the circuit 74 verifies the active state or not of the interface. When the interface is first used, none of the channels originally has a signal. The circuit then tests in 88 the level of the existing extra shift. On starting, the level of the extra shift is zero, thus the circuit 90 is excited to increment the extra shift. In the specific embodiment the incrementation is linear, and if it is considered that the time to increment the extra shift is between 1 s and 2 s the discontinuity is less of a nuisance. When the level of extra shift has reached the value of the dynamic, the test 88 no longer excites the circuit 90 for incrementing extra shifts. When the interface is used, at least one of the channels is excited and the circuit 74 then tests in 96 the level of extra shift against a zero value. At the start of use, the extra shift is equal to the dynamic, and is therefore not zero. The test 96 then excites a circuit 92 for decrementing the extra shifts. So long as the shift is not zero and at least one of the channels is excited, the decrementation circuit 92 is used. When the extra shift is zero, the test 96 no longer excites the circuit 92. In the specific embodiment the decrementation is linear, and if it is considered that the time to decrement the extra shift is between 1 s and 2 s the discontinuity effect is less of a nuisance. When use of the interface stops, the signals on all the channels become zero and the test 84 again verifies in 88 the level of the shift compared with the value of the dynamic.

An embodiment will now be described in which the series of digital signals supplied has values between zero and the value of the dynamic. As previously shown, this type of operation is sometimes more advantageous, especially when the signal serves as an address pointer. Figures 5B and 6B represent the various operations used by the invention's process. Using the series of standardized digital signals supplied by the previous operation, symbolized by the lozenge 70 in Figure 5B, a shift is applied to address the pointer to the value of the output wanted. As previously shown, the shift is not the same when the interface is active or when it is at rest. In Figures 6A and 6B the same functions are represented by identical digital references. The only difference resides in the level of the shift at rest.

The circuits represented in Figures 6A and 6B thus represent circuits that allow the signal value to be determined for which the operation obtained by the interface is neutral. The value is thus a time function of the existence of an input signal greater than the threshold value.

The present invention has been described together with an interface similar to that described in the French Patent Application 9800871 or in the European Patent Application 98420115.2, but it is clear that the described process can be used in other types of applications. Further, the diagrammatic representation in the figures shows two distinct channels, but it is clearly possible for those skilled in the art to use the invention's process for systems having a single channel or for systems having more than two channels.

The invention has been described with reference to a preferred embodiment. However, it will be appreciated that variations and modifications can be effected by a person of ordinary skill in the art without departing from the scope of the invention.

## Claims

1. A process for translating at least one input signal, coming from a sensor operating between a noise value, when no excitation is supplied to the sensor, and a maximum value, into an output signal having a set dynamic independent from the maximum value of the input signal and having a neutral operating point to be able to control opposing actions, comprising the following steps:
determining a threshold value from successive values of the input signal;
determining a maximum signal value from successive values of the input signal;
determining the output signal value by supplying for each input signal: a zero value when the input signal value is less than the threshold value and, when the input signal value is not less than the threshold value, a signal whose value is obtained by multiplying the input signal value reduced by the threshold value, by a standardizing factor obtained by dividing the dynamic determined by the maximum signal value reduced by the threshold value; and
determining an output signal value for which the operation obtained by the interface is neutral, this value being a time function of the existence of an input signal greater than the threshold value.

2. A process according to Claim 1 further comprising :
recording the maximum value; and
updating said maximum value whenever the input signal value is greater than the previously recorded value.

3. A process according to either of the Claims 1 and 2 further comprising, when the maximum value is not reached, decreasing the maximum value recorded and recording this new value.

4. A process according to Claim 1 further comprising routinely updating the minimum value.

5. A process according to any of claims 1 to 4 wherein the output signal value for which the operation is neutral is equal to half the dynamic.

6. A process according to Claim 5 wherein the time modification of the output signal value for which the operation is neutral is obtained in a time range between 1 s and 2 s.

7. A translation circuit for an interface, receiving an input signal coming from a sensor operating between a noise value, when no excitation is supplied to the sensor, and a maximum value, to obtain an output signal having a set dynamic independent from the maximum value of the input signal and having a neutral operating point of the interface to be able to control opposing actions, comprising:
a first memory (34) for recording a threshold value depending on the noise value;
a second memory (36) wherein the maximum signal value coming from the sensor is recorded;
a standardizing circuit (16) to modify the value of the signal coming from the sensor to supply a zero signal when the signal coming from the sensor is less than the threshold, and a standardized signal when the signal value is not less than the threshold value, the standardized value being obtained by multiplying the signal value coming from the sensor reduced by the threshold value, by a standardizing factor obtained by dividing the dynamic set by the maximum signal value reduced by the threshold value; and
a circuit (74) for determining the standardized signal value for which the operation obtained by the interface is neutral, this value being a time function of the existence of an input signal greater than the threshold value.

8. A circuit according to Claim 7 comprising a circuit (44) for updating the maximum value of the input signal.

9. A circuit according to Claim 8 comprising a circuit (45) for decreasing the maximum value of the input signal.
